# EUROPEAN PATENT SPECIFICATION

(11) **EP 3 407 712 B1**
(45) Date of publication and mention of the grant of the patent: **18.11.2020**
(21) Application number: 17744644.0
(22) Date of filing: 12.01.2017
(51) Int. Cl.: A01M 27/00, B65F 1/10, A01M 23/02, B65F 5/00

(54) **RODENT TRAPPING AND REMOVAL METHOD AND ARRANGEMENT**
VERFAHREN ZUM EINFANGEN UND ENTFERNEN VON NAGETIEREN UND ANORDNUNG
AGENCEMENT ET PROCÉDÉ DE PIÉGEAGE ET D'ÉLIMINATION DE RONGEUR

(30) Priority: 29.01.2016 SE 1650107
(43) Date of publication of application: 05.12.2018
(73) Proprietor: Envac AB, 112 26 Stockholm (SE)
(72) Inventor: MAGNUS, Ekholm, SE-111 61 Stockholm (SE)
(74) Representative: AWA Sweden AB
(86) International application number: PCT/SE2017/050029
(87) International publication number: WO 2017/131570

(56) References cited:
- EP-A2- 0 159 634
- WO-A1-02/102686
- WO-A1-2013/064146
- US-A- 1 597 236
- US-A- 2 501 282
- US-A- 4 596 087
- US-A- 4 653 221
- US-A- 6 088 948
- US-A1- 2014 373 430

## Description

### TECHNICAL FIELD

The present technology generally concerns the field of vacuum operated waste collection and specifically concerns a method as well as an arrangement for performing rodent control in association with such waste collection systems.

### BACKGROUND

The mostly closed waste collection points and leak tight transport pipes of the vacuum operated waste transport systems have been very successful in reducing the presence of rats, mice and other rodents at such installations. Although said systems have been successful in virtually eliminating the presence of rodents in the actual transport system, rodents are nevertheless attracted to spillage caused by improper waste handling around deposit points of the freestanding or separate so called "litter bin" types of inserts that are normally installed outdoors. Similar problems have sometimes been encountered in basement localities of multistory buildings where insertion chutes extending through the buildings are connected through discharge valves to a waste transport pipe. Other risk points are the central waste collection terminals where spillage may occur during collection and final disposal and where a certain odor level is hard to eliminate completely.

Where presenting a major sanitary nuisance, rodent infestation problems in association with waste handling facilities are presently eliminated through conventional means, such as with bait stations or different types of conventional cages or traps where food based rodent attractants are used to lure the rodents into the trap. However, when using baits care must be taken to prevent people and unintended animals from accidentally eating the bait. Furthermore it takes some time before the bait takes affect and it will thus not always be possible to determine where the rodents will die. The baiting and emptying of conventional cages or traps is a quite laboursome and unsanitary work.

### RELATED ART

It has been suggested to eliminate or at least reduce the presence of rats in sewage systems by installing rat traps at selected locations in the actual sewage pipe, such as in association with sewage shafts. EP2077716B1 and EP2244566B1 disclose examples of such rat traps that are secured to an outer circumference of a sewage pipe, surrounding an opening formed in the pipe. Said rat traps are designed to kill rats that are already present inside the actual sewage pipes. WO 2013/064146 discloses an automated rodent trap and from WO 02/102686 an insertion chute for a vacuum waste collection system is known.

### SUMMARY

It is a general object to provide an improved solution to the above discussed problems.

In particular it is an object to suggest an improved method of controlling the presence of rodents in the vicinity of, at and within vacuum waste collection installations.

In particular it is another object to suggest an improved arrangement for attracting and then incapacitating rodents.

These and other objects are met by the technology as defined by the accompanying claims.

The technology generally relates to vacuum waste collection systems and facilities to which rodents may be attracted causing sanitary and other problems. The waste collection system is in itself a largely closed system in which living rodents are hardly any problem at all.

In a first aspect of the technology, there is provided a method for controlling the presence of rodents in the vicinity of, at and within vacuum waste collection system installations. In a basic configuration the method comprises the steps of forming an entrance for rodents into the vacuum waste collection system and forming said rodent entrance as a branch pipe. A first free end of the branch pipe is left at least partly open, a second end of the branch pipe is communicated with a vacuum waste collection system transport pipe through a controllable branch pipe discharge valve and at least one rodent trap is provided in the branch pipe, between the two ends thereof.

In accordance with another aspect of the technology there is provided an arrangement for controlling the presence of rodents in the vicinity of, at and within vacuum waste collection system installations. In a basic configuration the arrangement includes a branch pipe being at least partly open at a first end and communicating with a vacuum waste collection system transport pipe at a second end thereof, a branch pipe discharge valve being positioned in association with said second end of the branch pipe, controlling communication between the system transport pipe and the branch pipe and at least one rodent trap being secured to the branch pipe, between the two ends thereof.

Preferred further developments of the basic technology as well as embodiments thereof are specified in the dependent subclaims.

Advantages offered by the present technology, in addition to those described above, will be readily appreciated upon reading the below detailed description of embodiments of the technology.

### BRIEF DESCRIPTION OF THE DRAWINGS

The present technology and its further objects and advantages will be best understood by reference to the following description taken together with the accompanying drawings, in which:
- Fig. 1: is a very schematic view of a first exemplary embodiment of a rodent controlling arrangement according to the present technology;
- Fig. 2: is a partial, schematic illustration of a longitudinal section through the branch pipe of the arrangement of Fig. 1;
- Fig. 3: is a very schematic view of a second exemplary embodiment of a rodent controlling arrangement according to the present technology; and
- Fig. 4: is a further schematic illustration of the second exemplary embodiment of the rodent controlling arrangement of Fig. 2.

### DETAILED DESCRIPTION

The technology will now be explained with reference to exemplifying embodiments of an arrangement as well as a method of controlling the presence of rodents, which are illustrated in the accompanying drawing figures. The embodiments serve to exemplify the application of the principles of the technology to two different installations in association with vacuum operated waste handling systems. It is emphasized though, that the illustrations are provided for the sole purpose of describing preferred embodiments of the technology and are not intended to limit the presently proposed technology to details or to any specific field of application thereof. The presently proposed solutions may with only minor adaption be applied to most types of installations in vacuum waste collection systems.

To overcome the initially described disadvantages and problems associated with traditional ways of handling rodent infestation in association with waste collection, the present technology now suggests a new approach optimizing quick and sanitary rodent control in virtually any installation of vacuum operated waste collection systems. In essence this is achieved by not only using effective rodent traps of such structure that they will effectively kill rodents but also by uniquely integrating rodent traps in the waste collection system and its installations.

This new approach provides several essential advantages that as essential features include a unique possibility of attracting rodents and guiding them to the traps by providing an entrance that communicates with a transport pipe of the system. Another unique feature is the possibility of effectively removing the trapped and killed rodents in a sanitary manner, such as by allowing them to be conveyed into the waste collection system transport pipe without requiring any manual contact with them. It also opens a possibility to sorting this rodent waste and selectively transporting it to any type of deposit, such as compostable waste/food waste. An additional advantage is that the arrangement is very easy to integrate into existing installations and control units of different kinds in association with vacuum waste collection or conveying systems. This also opens for the possibility of removing the trapped rodent from the branch pipe at a chosen time that may be appropriately adapted e.g. to the emptying cycles of the vacuum waste collection system.

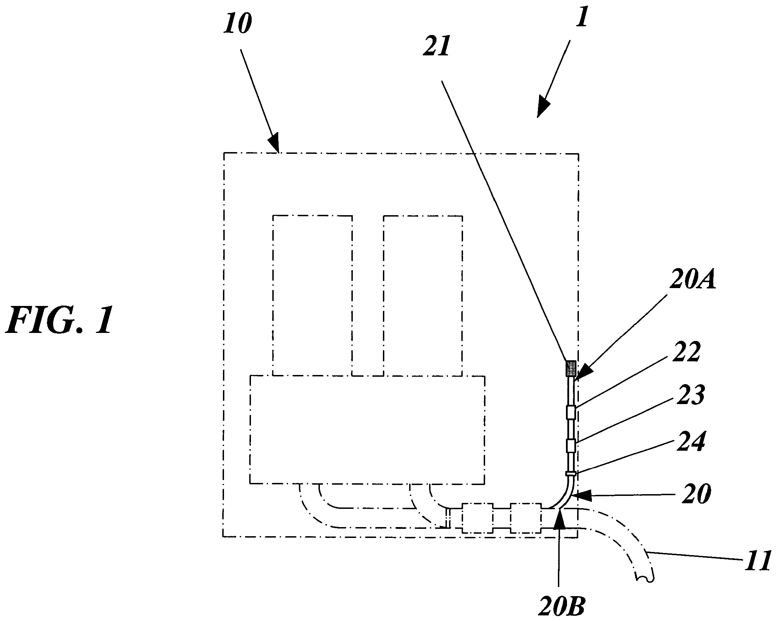

In Fig. 1 is illustrated a first exemplary embodiment of the application of the proposed technology to a very schematically depicted central waste collection terminal 10 that is part of an only vaguely indicated vacuum waste collection system 1. Fig. 1 is a schematic view from above of a terminal 10 that may be any type of building or structure being accessible to rodents in different ways, such as when emptying trucks collect waste containers etc. A proposed improved arrangement according to the present technology has the object of controlling the presence of rodents in the vicinity of, at and within vacuum waste collection system 1 installations 10 and includes as an essential feature a branch pipe 20. This branch pipe 20 is at least partly open at a first end 20A and serves as an entrance for rodents, primarily rats. The open first end 20A of the branch pipe 20 is preferably adapted to the kind of rodents being controlled and therefore has openings or apertures (not specifically designated) allowing said rodents to enter the branch pipe 20 freely but preventing larger animals and humans from entering. At an opposite second end 20B thereof the branch pipe 20 is connected to and communicates with a vacuum waste collection system 1 transport pipe 11. In the embodiment of Fig. 1 the branch pipe 20 has been provided inside the terminal 10 building or structure. It shall be emphasized though, that the branch pipe 20 may alternatively be provided fully or partly outside such a terminal building or structure.

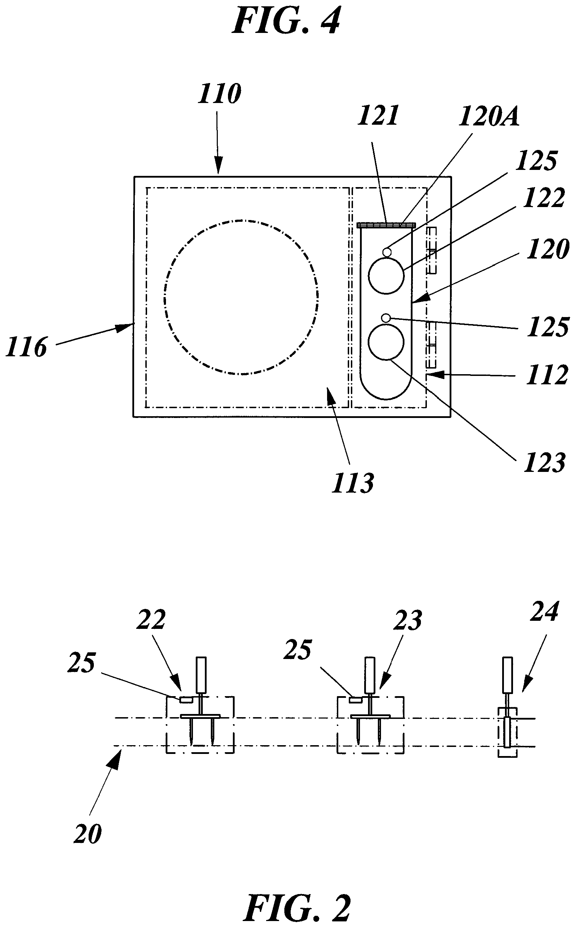

To the branch pipe 20 is secured at least one rodent trap, in the exemplary embodiment two rodent traps 22, 23 being provided in sequence, one after the other, and being secured to the branch pipe 20 between the two ends 2A, 2B thereof. In further developments and for specific applications it is also possible to provide more than two rodent traps being secured sequentially, one after the other, to the branch pipe 20. The actual rodent traps 22, 23 should be of a kind that quite instantaneously kills rodents as their presence in the vicinity of the trap is detected (sensors 25 shown in Fig. 2). In the illustrated embodiment the rodent trap is exemplified by a schematically shown guillotine type of trap having one or more blades that are sharpened at their lower end. The blades may alternatively be blunt at their lower end in order not to penetrate the rodents but rather crush them. As illustrated, two blades are provided that are spaced apart a distance in the longitudinal direction of the branch pipe 20 and that are activated by a piston unit. The presence of a rodent in the vicinity of a rodent trap 22 or 23 in the branch pipe 20 is detected by a sensor 25 that is provided in association with each rodent trap 22, 23. This sensor may be any appropriate type of motion sensor or heat sensor etc., such as an IR-sensor or a thermocouple type sensor. The number of guillotine blades in each rodent trap 22, 23 of this general type may e.g. be adapted to the speed and accuracy of the used sensor/sensors 25 in order to secure that each rodent detected in the branch pipe 20 is also securely trapped and killed. The number of rodent traps 22, 23 actually provided in each branch pipe is likewise governed by the expected effectiveness of each rodent trap in detecting and trapping rodents.

At a position downstream of the last rodent trap 23 of the branch pipe 20 and upstream of or in association with said second end 20B of the branch pipe, at its connection to the system transport pipe 11, is positioned a branch pipe discharge valve 24 controlling communication between the system transport pipe 11 and the branch pipe 20. The branch discharge valve 24 is here illustrated as a general type of piston controlled slide type valve but may be of any other appropriate type used to control communication between a main pipe and a branch pipe, such as a flap type valve provided at the very connection of the branch pipe 20 to the system transport pipe 11. By controlling the operation of the discharge valve 24 the system vacuum pressure existing in the vacuum waste collection system 1 transport pipe 11 may be selectively applied to the branch pipe 20 to thereby remove trapped and killed rodents therefrom.

The at least partly open first end 20A of the branch pipe 20 is provided with a closure means 21, such as a netting, being provided for partly closing this first open end 20A of the branch pipe 20. The closure means 21 may be provided inside the open first end 20A or on the outside, enclosing the branch pipe 20 at said end. It has apertures that are also adapted to allow the entering of rodents of the kind intended to be trapped and to block the entrance for larger animals or humans.

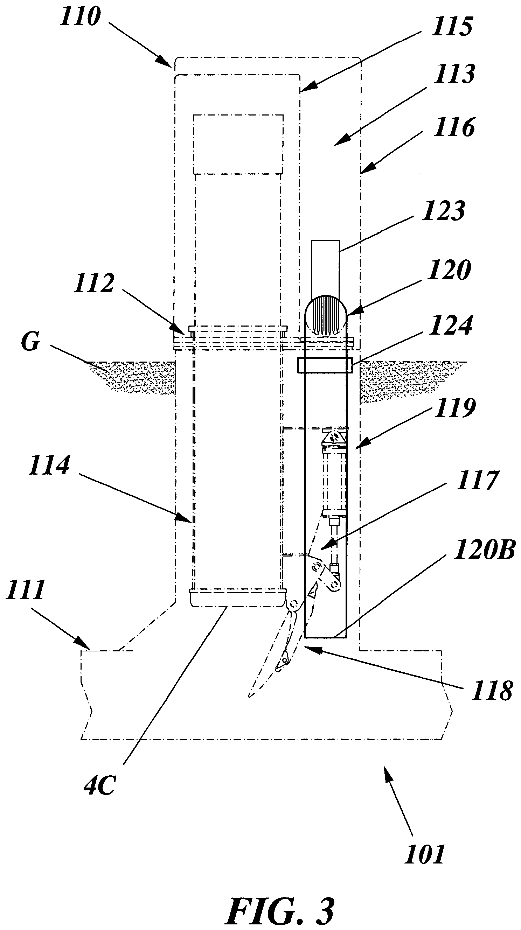

In Figs. 3 and 4 is schematically illustrated a second embodiment of the present technology, as applied to another type of installation 110 in a vacuum operated waste collection system 101. The installation is in this application a waste collection point in the form of a so called free standing waste inlet 110 that may be of many different configurations. The waste inlet 110 is in the illustrated embodiment depicted as a waste inlet 110 generally having an inlet part 115 provided above ground G and a chute part 114 being provided below ground G for connection to an underground system transport pipe 111. The inlet part 115 is surrounded by a housing 116 providing a free space 113 around the inlet part 115 allowing the positioning of a branch pipe 120 therein. The branch pipe 120 does in this case consist of a generally horizontal portion provided inside the inlet part 115 housing 116 and a generally vertical portion being connected to the horizontal part through a pipe bend. This vertical portion extends through an interface 112 between the inlet part 115 and the chute part 114 and into a space 119 provided outside the chute part, serving to also receive an inlet discharge valve 118 with its operating means 117. A number of rodent traps 122, 123, here two, and a corresponding number of sensors 125 are provided in the horizontal part of the branch pipe 120. Like in the first embodiment the at least partly open first end 120A of the branch pipe 120 is provided with closure means 121, such as a netting, for partly closing this first open end 120A of the branch pipe 120. Again, said closure means 121 has apertures that allow the entering of rodents of the kind intended to be trapped and to block the entrance for larger animals or humans. An opening, not illustrated, may in certain cases be provided in the inlet unit 110 housing 116 to allow rodents into the free space 113 around the inlet part 115.

Furthermore, this embodiment is likewise depicted with two rodent traps 122, 123 being provided in sequence, one after the other, and being secured to the branch pipe 120 between the two ends 102A, 102B thereof. Each rodent trap 122, 123 is likewise provided with an associated sensor 125 for detecting the presence of rodents and for activating the traps based on such detection. The considerations discussed above with regard to the number and type of traps and the type of sensors apply also to this embodiment. In the case of this second embodiment the depicted rodent traps 122, 123 exemplify another common type, employing sharpened, pointed "spikes" that may be thrust into the branch pipe 120 when a rodent is detected therein by an associated sensor (generally known e.g. from WO2008046424 A1). Like in the first embodiment the "spikes" may alternatively be blunt at their lower end in order not to penetrate the rodents but rather crush them. In this embodiment a second open end 120A of the branch pipe 120 opens into the system 101 transport pipe 111 whereby the communication is likewise controlled by a branch pipe discharge valve 124 that is preferably provided in the vertical portion of the branch pipe 120. Here, the controlled branch pipe discharge valve 124 may either be of the slide valve type (as schematically indicated) or of a flap valve type provided immediately at the open second end.

From the above it will be realized that this technology also concerns a method for controlling the presence of rodents in the vicinity of, at and within vacuum waste collection system installations, as described above. In the following, an exemplifying embodiment of such a proposed method will be described with reference to the above explained drawings. Basically, the method involves forming an entrance for rodents into the vacuum waste collection system 1; 101, whereby said rodent entrance is formed as a branch pipe 20; 120. A first free end 20A; 120A of the branch pipe is left at least partly open and a second end 20B; 120B of the branch pipe communicates with a vacuum waste collection system transport pipe 11; 111 through a controllable branch pipe discharge valve 24; 124. Furthermore the method involves providing at least one rodent trap 22, 23; 122, 123 in the branch pipe, between the two ends thereof.

The presence of a rodent at or in the vicinity of the rodent trap/traps 22, 23; 122, 123 in the branch pipe 20; 120 is detected by means of associated sensors 25; 125 and each rodent trap is activated in response to such a detection of the presence of a rodent, thereby killing the rodent. Such activation may include the rapid extension of guillotine blades or "spikes" into the branch pipe 20; 120. When a trap has been activated in this manner, trapped and killed rodents are in the relevant cases released from the trap 22, 23; 122, 123, such as by retracting the blades or "spikes". A controllable branch pipe discharge valve 24; 124 provided in association with the second end 20B; 120B of the branch pipe 20; 120 is opened to remove the rodents from the branch pipe. The removal of killed rodents is performed by means of a system vacuum pressure in the transport pipe 11; 11, by opening the communication between the system transport pipe and the branch pipe through the branch pipe discharge valve. A sensor signal as a result of a detection of an activation of a rodent trap may preferably be used to start the suction fan or fans applying the waste collection system vacuum pressure.

The controllable branch pipe discharge valve 24; 124 that is associated with the second end 20B; 120B of the branch pipe 20; 120 may be selectively opened at intervals to conduct rodent attracting odors from the system transport pipe 11; 111, through the branch pipe and to the first open end 20A; 120A thereof. In order to control the access to the branch pipe the first open end 20A; 120A of the branch pipe 20; 120 is partially closed by a closure means 21; 121, such as a netting, having apertures adapted to allow the entering of rodents of the kind intended to be trapped and to block the entrance for larger animals or humans. By the removal of trapped and killed rodents by the controlled opening of the discharge valve the method also provides an opportunity to sorting this rodent waste and selectively transporting it to any type of deposit, such as compostable waste/food waste. In this connection should be pointed out that the control of the discharge valves and rodent traps are in the described embodiments intended to be integrated in a general control system of the vacuum operated waste collection system and/or, in the applicable cases, of the specific installation thereof.

In alternative, but not specifically illustrated embodiments of the technology variations of the different illustrated parts of the units of the arrangement may be employed without departing from the scope of the technology. An example of this is the use of different presently known as well as future rodent trap configurations. Likewise, discharge valve configurations other than those exemplified herein may be employed and connections between branch pipes and system transport pipes may be configured in other ways than the ones illustrated. It shall also be emphasized that although the technology has been described and illustrated with specific reference to an application by inlet and collection terminal configurations, the technology is in no way restricted to such applications. The basic principles of the technology may be applied to other installations in vacuum operated waste collection systems, such as by sectioning valves between system branches, and in fact anywhere in the system. Thus, basically rodent attracting branch pipes as described herein may be provided and communicated with a system transport pipe at any location along said transport pipe and in basements and waste storage rooms associated with a transport pipe.

The present technology has been described in connection with what is considered the most practical and preferred embodiments. However, it shall be understood that the technology is not limited to the disclosed embodiments but is intended to cover various modifications and equivalent arrangements included within the scope of the appended claims.

## Claims

1. A method of controlling the presence of rodents in the vicinity of, at and within vacuum waste collection system (1; 101) installations (10; 110), **characterized by:**
- forming an entrance for rodents into the vacuum waste collection system;
- forming said rodent entrance as a branch pipe (20; 120);
- leaving a first free end (20A; 120A) of the branch pipe at least partly open;
- communicating a second end (20B; 120B) of the branch pipe with a vacuum waste collection system transport pipe (11; 111) through a controllable branch pipe discharge valve (24; 124); and
- providing at least one rodent trap (22, 23; 122, 123) in the branch pipe, between the two ends.

2. A method according to claim 1, **characterized in that** the presence of a rodent at or in the vicinity of the rodent trap/traps (22, 23; 122, 123) in the branch pipe (20; 120) is detected by means of a sensor (25; 125) and that the rodent trap/traps is/are activated in response to such a detection of the presence of a rodent, thereby killing the rodent.

3. A method according to claim 2, **characterized by** releasing trapped and killed rodents from the trap/traps (22, 23; 122, 123) and opening the controllable branch pipe discharge valve (24; 124) in association with the second end (20B; 120B) of the branch pipe (20; 120) to remove the rodents from the branch pipe.

4. A method according to any of claims 1-3, **characterized in that** the controllable branch pipe discharge valve (24; 124) that is associated with the second end (20B; 120B) of the branch pipe (20; 120) is selectively opened at intervals to conduct rodent attracting odors from the system transport pipe (11; 111), through the branch pipe and to the first open end (20A; 120A) thereof.

5. A method according to any of claims 1-4, **characterized in that** the first open end (20A; 120A) of the branch pipe (20; 120) is partially closed by a closure means (21; 121), such as a netting, having apertures adapted to allow the entering of rodents of the kind intended to be trapped and to block the entrance for larger animals or humans.

6. An arrangement for controlling the presence of rodents in the vicinity of, at and within vacuum waste collection system (1; 101) installations (10; 110), **characterized by:**
- a branch pipe (20; 120) being at least partly open at a first end (20A; 120A) and communicating with a vacuum waste collection system transport pipe (11; 111) at a second end (20B; 120B) thereof;
- a branch pipe discharge valve (24; 124) being positioned in association with said second end of the branch pipe, controlling communication between the system transport pipe and the branch pipe; and
- at least one rodent trap (22, 23; 122, 123) being secured to the branch pipe, between the two ends thereof.

7. An arrangement according to claim 6, **characterized by** two or more rodent traps (22, 23; 122, 123) being secured sequentially, one after the other, to the branch pipe (20; 120).

8. An arrangement according to claims 6 or 7, **characterized by** at least one sensor (25; 125) being provided in association with the/each rodent trap (22, 23; 122, 123).

9. An arrangement according to any of claims 6 - 8, **characterized in that** the branch pipe discharge valve (24; 124) is a slide type valve.

10. An arrangement according to any of claims 6 - 9, **characterized by** a closure means (21; 121), such as a netting, being provided partly closing the first open end (20A; 120A) of the branch pipe (20; 120), said closure means having apertures adapted to allow the entering of rodents of the kind intended to be trapped and to block the entrance for larger animals or humans.

## Patentansprüche

1. Verfahren zum Kontrollieren der Anwesenheit von Nagetieren in der Nähe von, an und innerhalb von Anlagen (10; 110) eines Vakuum-Abfallsammelsystems (1; 101), **das gekennzeichnet ist durch:**
- Bilden eines Eingangs für Nagetiere in das Vakuum-Abfallsammelsystem;
- Bilden des Nagetiereingangs in Form eines Abzweigrohrs (20; 120);
- mindestens teilweises Offenlassen eines ersten freien Endes (20A; 120A) des Abzweigrohrs;
- Verbinden eines zweiten Endes (20B; 120B) des Abzweigrohrs mit einem Vakuum-Abfallsammelsystem-Transportrohr (11; 111) durch ein steuerbares Abzweigrohrauslassventil (24; 124); und
- Bereitstellen mindestens einer Nagetierfalle (22, 23; 122, 123) in dem Abzweigrohr zwischen den beiden Enden.

2. Verfahren nach Anspruch 1, **dadurch gekennzeichnet, dass** die Anwesenheit eines Nagetiers an oder in der Nähe der Nagetierfalle(n) (22, 23; 122, 123) in dem Abzweigrohr (20; 120) mittels eines Sensors (25; 125) erfasst wird und dass die Nagetierfalle(n) als Reaktion auf eine solche Erfassung der Anwesenheit eines Nagetiers aktiviert wird/werden, wodurch das Nagetier getötet wird.

3. Verfahren nach Anspruch 2, **dadurch gekennzeichnet, dass** gefangene und getötete Nagetiere aus der/den Falle(n) (22, 23; 122, 123) freigesetzt werden und das steuerbare Abzweigrohrauslassventil (24; 124) in Assoziation mit dem zweiten Ende (20B; 120B) des Abzweigrohrs (20; 120) geöffnet wird, um die Nagetiere aus dem Abzweigrohr zu entfernen.

4. Verfahren nach einem der Ansprüche 1-3, **dadurch gekennzeichnet, dass** das steuerbare Abzweigrohrauslassventil (24; 124), das mit dem zweiten Ende (20B; 120B) des Abzweigrohrs (20; 120) assoziiert ist, selektiv in Intervallen geöffnet wird, um Nagetier anziehende Gerüche aus dem Systemtransportrohr (11; 111) durch das Abzweigrohr und zu dessen erstem offenen Ende (20A; 120A) zu leiten.

5. Verfahren nach einem der Ansprüche 1-4, **dadurch gekennzeichnet, dass** das erste offene Ende (20A; 120A) des Abzweigrohrs (20; 120) teilweise durch ein Verschlussmittel (21; 121), wie z.B. ein Netz, verschlossen ist, das Öffnungen aufweist, die geeignet sind, das Eindringen von Nagetieren der Art, die gefangen werden sollen, zu ermöglichen und den Eingang für größere Tiere oder Menschen zu versperren.

6. Anordnung zum Kontrollieren der Anwesenheit von Nagetieren in der Nähe von, an und innerhalb von Anlagen (10; 110) eines Vakuum-Abfallsammelsystems (1; 101), **dadurch gekennzeichnet, dass:**
- ein Abzweigrohr (20; 120) an einem ersten Ende (20A; 120A) mindestens teilweise offen ist und an einem zweiten Ende (20B; 120B) mit einem Vakuum-Abfallsammelsystem-Transportrohr (11; 111) in Verbindung steht;
- ein Abzweigrohrauslassventil (24; 124) in Assoziation mit dem zweiten Ende des Abzweigrohrs angeordnet ist und die Verbindung zwischen dem Systemtransportrohr und dem Abzweigrohr steuert; und
- mindestens eine Nagetierfalle (22, 23; 122, 123) an dem Abzweigrohrs zwischen den beiden Enden davon befestigt ist.

7. Anordnung nach Anspruch 6, **dadurch gekennzeichnet, dass** zwei oder mehr Nagetierfallen (22, 23; 122, 123) in Reihe nacheinander an dem Abzweigrohr (20; 120) befestigt werden.

8. Anordnung nach den Ansprüchen 6 oder 7, **dadurch gekennzeichnet, dass** mindestens ein Sensor (25; 125) in Assoziation mit der/jeder Nagetierfalle (22, 23; 122, 123) bereitgestellt wird.

9. Anordnung nach einem der Ansprüche 6 - 8, **dadurch gekennzeichnet, dass** das Abzweigrohrauslassventil (24; 124) ein Schieberventil ist.

10. Anordnung nach einem der Ansprüche 6 - 9, **dadurch gekennzeichnet, dass** ein Verschlussmittel (21; 121), wie z.B. ein Netz, bereitgestellt wird, das das erste offene Ende (20A; 120A) des Abzweigrohrs (20; 120) teilweise verschließt, wobei die Verschlussmittel Öffnungen aufweisen, die so beschaffen sind, dass sie das Eindringen von Nagetieren der Art, die gefangen werden sollen, ermöglichen und den Eingang für größere Tiere oder Menschen versperren.

## Revendications

1. Procédé de contrôle de la présence de rongeurs au voisinage d'installations (10 ; 110) de système de collecte des déchets sous vide (1 ; 101), au niveau de celles-ci et à l'intérieur de celles-ci, **caractérisé par** :
- la formation d'une entrée destinée à des rongeurs dans le système de collecte des déchets sous vide ;
- la formation de ladite entrée pour rongeurs en tant que tuyau de dérivation (20 ; 120) ;
- le fait de laisser une première entrée libre (20A ; 120A) du tuyau de dérivation au moins partiellement ouverte ;
- la communication d'une seconde extrémité (20B ; 120B) du tuyau de dérivation avec un tuyau de transport de système de collecte des déchets sous vide (11 ; 111) par l'intermédiaire d'une soupape de décharge de tuyau de dérivation réglable (24 ; 124) ; et
- l'apport d'au moins un piège à rongeurs (22, 23 ; 122, 123) dans le tuyau de dérivation, situé entre les deux extrémités.

2. Procédé selon la revendication 1, **caractérisé en ce que** la présence d'un rongeur au niveau du ou des pièges à rongeurs (22, 23 ; 122, 123) ou à proximité de ceux-ci dans le tuyau de dérivation (20 ; 120) est détectée au moyen d'un capteur (25 ; 125) et **en ce que** le ou les pièges à rongeurs sont activés en réponse à une telle détection de la présence d'un rongeur, permettant ainsi de tuer le rongeur.

3. Procédé selon la revendication 2, **caractérisé par** la libération des rongeurs piégés ou tués du ou des pièges (22, 23 ; 122, 123) et par l'ouverture de la soupape de décharge de tuyau de dérivation réglable (24 ; 124) en association avec la seconde extrémité (20B ; 120B) du tuyau de dérivation (20 ; 120) afin d'éliminer les rongeurs du tuyau de dérivation.

4. Procédé selon l'une quelconque des revendications 1 à 3, **caractérisé en ce que** la soupape de décharge de tuyau de dérivation réglable (24 ; 124) qui est associée à la seconde extrémité (20B ; 120B) du tuyau de dérivation (20 ; 120) est ouverte de manière sélective à différents intervalles afin de guider des odeurs attirant les rongeurs provenant du tuyau de transport de système (11 ; 111), par l'intermédiaire du tuyau de dérivation et en direction de la première extrémité ouverte (20A ; 120A) de celui-ci.

5. Procédé selon l'une quelconque des revendications 1 à 4, **caractérisé en ce que** la première extrémité ouverte (20A ; 120A) du tuyau de dérivation (20 ; 120) est partiellement fermé au moyen d'un moyen de fermeture (21 ; 121), tel qu'un filet, comportant des ouvertures adaptées pour permettre l'entrée des rongeurs du type souhaité devant être piégés et pour bloquer l'entrée pour les gros animaux ou les humains.

6. Agencement permettant de contrôler la présence de rongeurs au voisinage d'installations (10 ; 110) de système de collecte des déchets sous vide (1 ; 101), au niveau de celles-ci et à l'intérieur de celles-ci, **caractérisé par**:
- un tuyau de dérivation (20 ; 120) étant au moins partiellement ouvert au niveau d'une première entrée (20A ; 120A) et communiquant avec un tuyau de transport de système de collecte des déchets sous vide (11 ; 111) au niveau d'une seconde extrémité (20B ; 120B) de celui-ci ;
- une soupape de décharge de tuyau de dérivation réglable (24 ; 124) étant positionnée en association avec ladite seconde extrémité du tuyau de dérivation, contrôlant la communication entre le tuyau de transport de système et le tuyau de dérivation ; et
- au moins un piège à rongeurs (22, 23 ; 122, 123) étant fixé au tuyau de dérivation, situé entre les deux extrémités.

7. Agencement selon la revendication 6, **caractérisé par** deux ou plusieurs pièges à rongeurs (22, 23 ; 122, 123) étant fixés de manière séquentielle, l'un après l'autre, au tuyau de dérivation (20 ; 120).

8. Agencement selon la revendication 6 ou 7, **caractérisé par** au moins un capteur (25 ; 125) étant monté en association avec le ou chaque piège à rongeurs (22, 23 ; 122, 123).

9. Agencement selon l'une quelconque des revendications 6 à 8, **caractérisé en ce que** la soupape de décharge de tuyau de dérivation réglable (24 ; 124) est une soupape de type coulissante.

10. Agencement selon l'une quelconque des revendications 6 à 9, **caractérisé par** un moyen de fermeture (21 ; 121), tel qu'un filet, étant fourni afin de partiellement fermer la première extrémité ouverte (20A ; 120A) du tuyau de dérivation (20 ; 120), ledit moyen de fermeture comportant des ouvertures adaptées pour permettre l'entrée des rongeurs du type souhaité devant être piégés et pour bloquer l'entrée pour les gros animaux ou les humains.
